# DEMANDE DE BREVET EUROPEEN

(11) **EP 0 655 607 A1**
(43) Date de publication de la demande: **31.05.1995**
(21) Numéro de dépôt: 94402712.7
(22) Date de dépôt: 28.11.1994
(51) Int. Cl.: G01D 5/26

(54) **Dispositif d'analyse d'un flux lumineux fourni par un capteur à codage de modulation spectrale**

(30) Priorité: 30.11.1993 FR 9314320
(71) Demandeur: BERTIN & CIE, F-78373 Plaisir Cedex (FR)
(72) Inventeur: Lequime, Michel, F-13510 Eguilles (FR); Huard, Serge, F-13400 Aubagne (FR); Giovannini, Hugues, F-13012 Marseille (FR)
(74) Mandataire: Ramey, Daniel

(57) **Abrégé**

Dispositif d'analyse pour un capteur (14) à codage de modulation spectrale éclairé par une source (10) de lumière incohérente, ce dispositif comprenant un interféromètre démodulateur (18) à réseaux de diffraction (32) qui sont dans un montage de Littrow du premier ordre pour la longueur d'onde centrale du flux émis par la source (10), le flux sortant de l'interféromètre démodulateur (18) étant focalisé par une lentille (30) sur une barrette (20) de photodétecteurs.

## Description

L'invention concerne un dispositif d'analyse d'un flux lumineux fourni par un capteur à codage de modulation spectrale qui est éclairé par une source de lumière incohérente et qui est soumis à une grandeur physique à mesurer telle par exemple qu'un déplacement, une pression, une température, une tension électrique, un champ magnétique, etc.

De tels capteurs et des moyens associés d'analyse spectrale sont déjà connus et décrits notamment dans le Brevet Européen 0 242 250 de la Demanderesse. Ces capteurs comprennent par exemple un élément sensible biréfringent placé entre un polariseur et un analyseur et traversé par le flux lumineux émis par une source de lumière incohérente. Le flux lumineux sortant du capteur présente une modulation périodique de son spectre à une fréquence égale à l'inverse de la différence de marche optique dans l'élément sensible, cette différence de marche optique étant elle-même une fonction directe de la grandeur physique à mesurer. La mesure de cette différence de marche permet donc d'obtenir une valeur de la grandeur physique, moyennant un étalonnage préalable du capteur.

Dans le Brevet Européen 0 242 250, il est proposé de mesurer cette différence de marche au moyen d'un système de démodulation statique associé à une barrette linéaire de photodétecteurs sur laquelle on forme l'image du flux démodulé pour obtenir les positions du pic de corrélation d'ordre O qui est centré sur une différence de marche nulle et du pic de corrélation d'ordre +1 ou -1 qui est centré sur la différence de marche recherchée.

Cependant, si l'on voulait de cette façon mesurer avec précision des différences de marche ou des variations de différence de marche pouvant atteindre des valeurs relativement élevées (par exemple de quelques millimètres), il faudrait utiliser une barrette comprenant un nombre très élevé de photodétecteurs: les signaux à détecter sont en effet du type oscillant avec une période égale à la longueur d'onde et il est naturellement nécessaire de les échantillonner avec une finesse suffisante (par exemple de 10 points par période) pour les analyser de manière convenable. De telles barrettes (ayant un nombre de pixels supérieur à 10 000) n'existent pas actuellement sur le marché. De plus, le flux lumineux devrait être dispersé sur toute la longueur de la barrette, chaque photodétecteur ne recevant alors qu'un signal extrêmement faible.

Les moyens qui ont été proposés pour éviter ces inconvénients sont en général très complexes et délicats à mettre en oeuvre.

L'invention a pour but d'apporter une solution simple, efficace et performante à ce problème.

Elle a pour objet un dispositif d'analyse associable à un ou à des capteurs à codage de modulation spectrale, permettant de mesurer avec précision des différences de marche optique relativement importantes, typiquement de quelques millimètres.

Elle propose un dispositif d'analyse d'un flux lumineux fourni par un capteur à codage de modulation spectrale éclairé par une source de lumière incohérente, ce dispositif comprenant un interféromètre démodulateur capable de générer une différence de marche optique sensiblement égale à celle produite dans le capteur par une grandeur physique à mesurer, et des moyens photorécepteurs recevant le flux lumineux issu de l'interféromètre démodulateur, caractérisé en ce que l'interféromètre démodulateur est un interféromètre de Michelson à réseaux dans lequel les réseaux sont utilisés en montage de Littrow, par exemple dans le premier ordre pour la longueur d'onde centrale du flux lumineux émis par la source, l'interféromètre démodulateur comprenant en sortie des moyens de formation d'une image sur une barrette linéaire de photodiodes ou de photorécepteurs du type CCD.

L'utilisation d'un tel système de démodulation permet de supprimer la modulation spatiale de type sinusoïdale caractéristique des pics de corrélation pour ne conserver que leur enveloppe, ce qui facilite beaucoup la détection de la position de leur maximum ou de leur barycentre et permet d'utiliser pour cela une barrette linéaire de photodétecteurs d'un type usuel, comprenant par exemple 1024 photodiodes, tout en obtenant une excellente résolution (par exemple de 10 à 100nm sur une gamme de différences de marche optique dans le capteur de quelques millimètres).

Le dispositif selon l'invention permet également de détecter la position du pic de corrélation d'ordre O, ce qui fournit une calibration automatique du dispositif.

Les capteurs à codage de modulation spectrale utilisables avec ce dispositif peuvent être du type décrit plus haut, comprenant un élément sensible biréfringent placé entre un polariseur et un analyseur croisés ou parallèles, ou bien ils peuvent comprendre des fibres optiques biréfringentes, soumises à des pressions ou des chocs localisés dont on détermine les positions à partir des positions des pics de corrélation dans le signal démodulé.

L'invention sera mieux comprise et d'autres caractéristiques, détails et avantages de celle-ci apparaitront plus clairement à la lecture de la description qui suit, faite à titre d'exemple en référence aux dessins annexés, dans lesquels :
la figure 1 représente schématiquement un capteur à codage de modulation spectrale associé à un dispositif selon l'invention;
la figure 2 est un graphe représentant schématiquement l'allure du signal obtenu en sortie du dispositif selon l'invention;
les figures 3 et 4 sont des courbes représentant l'allure des signaux fournis par le dispositif selon l'invention dans deux cas différents.

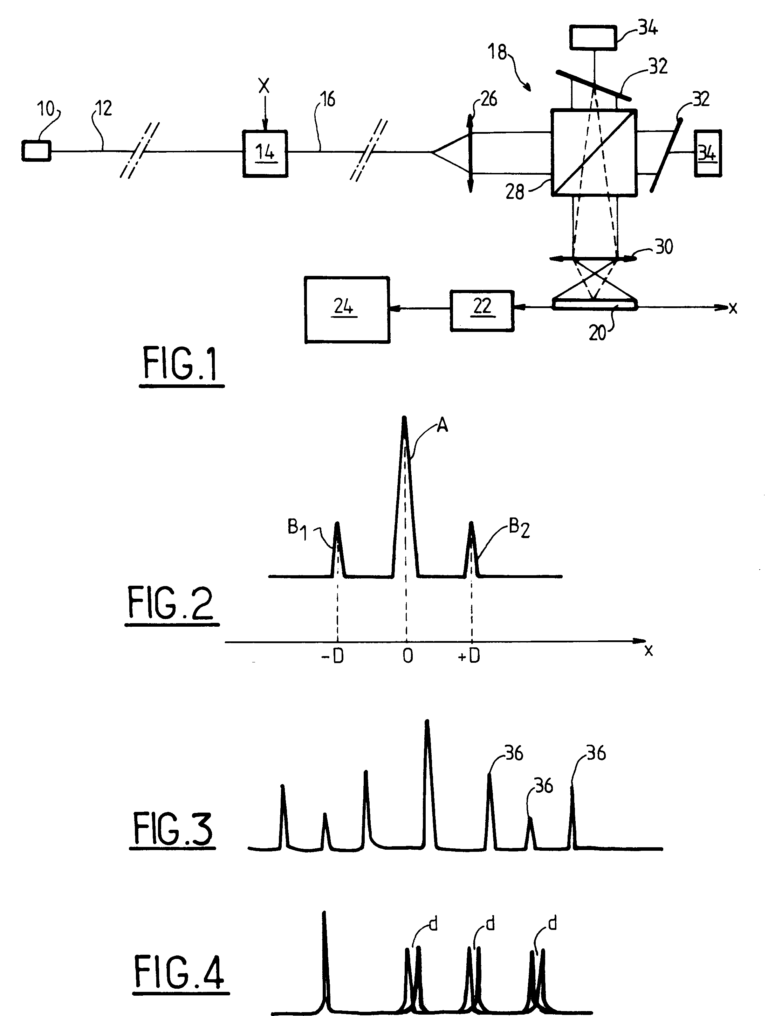

On se réfère d'abord à la figure 1, où la référence 10 désigne une source de lumière incohérente, telle qu'une diode électro-luminescente par exemple, reliée par une fibre optique 12 à un capteur 14 à codage de modulation spectrale qui est soumis à une grandeur physique X à mesurer, telle par exemple qu'un déplacement, une pression, une température, une tension électrique, un champ magnétique, etc.

Comme décrit dans le Brevet Européen antérieur précité de la Demanderesse, ce capteur 14 peut comprendre un élément sensible biréfringent, placé entre un polariseur et un analyseur croisés ou parallèles et soumis à la grandeur physique X dont l'action sur l'élément sensible du capteur se traduit par une modulation sinusoïdale du spectre du flux lumineux sortant du capteur, cette modulation sinusoïdale ayant une fréquence qui est l'inverse de la différence de marche optique dans le capteur résultant de l'action de la grandeur physique X.

Le capteur 14 est relié par une fibre optique 16 à un dispositif d'analyse selon l'invention, qui comprend essentiellement un interféromètre démodulateur 18 associé en sortie à une barrette linéaire 20 de photodétecteurs connectée à des moyens de lecture 22 et de traitement 24 des signaux de sortie des photodétecteurs.

L'interféromètre démodulateur 18 comprend en entrée une lentille de collimation 26 recevant le flux lumineux sortant de la fibre 16 et le transformant en un faisceau de rayons parallèles, et un cube 28 séparateur de faisceaux recevant ce faisceau sur une face d'entrée et le réinjectant par une face de sortie sur une lentille 30 de focalisation formant une image du champ d'interférences sur la barrette linéaire 20 de photorécepteurs. En regard des deux autres faces du cube sont disposés des réseaux plans 32 de diffraction identiques et fonctionnant en réflexion, qui sont orientés de façon symétrique par rapport aux deux faces du cube 28.

Ces deux réseaux plans 32 sont utilisés en montage de Littrow de préférence du premier ordre pour la longueur d'onde centrale du flux lumineux émis par la source 10, la constitution de l'interféromètre démodulateur 18 étant analogue à celle d'un SISAM (spectromètre interférentiel à sélection par amplitude de modulation).

Les deux réseaux de diffraction 32 sont chacun associés à des moyens 34 de déplacement en translation et en rotation, permettant notamment de faire varier l'angle de ces réseaux avec les faces correspondantes du cube séparateur 28.

Le système qui vient d'être décrit fonctionne de la façon suivante :
le flux lumineux émis par la source 10 est modulé spectralement de façon périodique dans le capteur 14 à une fréquence qui est fonction de la différence de marche optique dans le capteur, elle-même fonction de la valeur de la grandeur physique X agissant sur le capteur. Le flux modulé sortant du capteur 14 est transmis à l'interféromètre démodulateur 18 et le signal enregistré sur la barrette 20 de photorécepteurs est constitué d'un fond continu, d'un pic central centré sur une valeur x=0 (l'axe x étant colinéaire à la barrette 20), et de deux pics secondaires symétriques par rapport au pic central. En figure 2 où l'on a représenté l'allure du signal reçu par la barrette 20, on a désigné par A le pic central et par B1 et B2 les deux pics secondaires situés de part et d'autre de ce pic central. Les amplitudes des trois pics sont normalement modulées spatialement par une fonction sinusoïdale. Lorsque les réseaux 32 sont dans un montage de Littrow du premier ordre pour la longueur d'onde centrale de la source 10, la modulation spatiale des pics A, B1, B2 disparaît et l'amplitude des deux pics secondaires B1 et B2 est proportionnelle à cos(2πσ₀D), D étant la différence de marche optique dans le capteur 14, et σ₀ étant le nombre d'onde central du flux lumineux émis par la source 10. La valeur x correspondant à l'amplitude maximale d'un des deux pics secondaires donne la différence de marche D dans le capteur 14 (moyennant un étalonnage préalable).

Les essais réalisés ont parfaitement confirmé la théorie. On a par exemple utilisé comme source lumineuse 10 une diode électroluminescence émettant un flux lumineux centré sur une longueur d'onde de 850 nm avec une longueur de cohérence d'environ 15 µm. Les réseaux 32 ont été gravés avec un pas de 3,3 µm et blazés pour une longueur d'onde de 600 nm. La barrette 20 comprenait 1024 photodiodes. L'image du plan bissecteur du cube 28 était formée avec un grandissement sensiblement égal à 12 sur la barrette 20. Le capteur 14 à codage de modulation spectrale utilisé dans cet essai était un interféromètre de Michelson dont on pouvait déplacer un miroir en translation avec une précision de 1 nm en utilisant un transducteur piézoélectrique. On a pu obtenir, sur la mesure de la différence de marche optique dans le capteur, une résolution meilleure que 100 nm sur une gamme de quelques millimètres, Ces performances peuvent être facilement améliorées, en modifiant le grandissement de la lentille 30, en utilisant une barrette 20 comprenant davantage de photodiodes, et en traitant numériquement le signal enregistré par la barrette pour avoir une résolution spatiale meilleure qu'un pixel.

Le dispositif d'analyse spectrale selon l'invention peut être utilisé pour démoduler les flux fournis par plusieurs capteurs. Dans ce cas, la variation de différence de marche optique de chaque capteur est reliée au déplacement des pics secondaires correspondants du signal enregistré par la barrette de photodiodes.

Il peut arriver que l'amplitude des pics secondaires soit nulle ou quasi-nulle, puisqu'elle est proportionnelle à cos(2πσ₀D), ce qui rend les mesures impossibles. Dans ce cas, on peut ajouter dans un bras de l'interféromètre démodulateur un moyen de retard programmable, permettant de faire varier le retard global d'une quantité quelconque comprise dans la plage [-π/2, +π/2]. Il est alors toujours possible de rétablir la différence de marche à une valeur rendant maximale l'amplitude du pic de corrélation, et d'en tenir compte dans le calcul du résultat.

Les capteurs utilisables avec le dispositif selon l'invention peuvent être également constitués de fibres optiques biréfringentes soumises localement à des chocs ou des impacts. Lorsque les fibres optiques ne comprennent pas de points de couplage, on obtient en sortie de la barrette de photodiodes un signal du type représenté en figure 3, où les positions des pics secondaires 36 correspondent aux différences de marche optique entre l'extrémité de sortie d'une fibre et les points où des chocs ou impacts ont été appliqués.

Lorsque les fibres optiques comprennent des points de couplage, on obtient un signal du type représenté en figure 4, et dans ce cas les déplacements d des pics secondaires permettent de remonter aux variations de différence de marche accumulées entre les différents points de couplage et l'extrémité de la fibre sensible.

## Revendications

1. Dispositif d'analyse d'un flux lumineux fourni par un capteur à codage de modulation spectrale éclairé par une source (10) de lumière incohérente, ce dispositif comprenant un interféromètre démodulateur (18) capable de générer une différence de marche optique sensiblement égale à celle produite dans le capteur (14) par une grandeur physique X à mesurer, et des moyens photorécepteurs (20) recevant le flux lumineux issu de l'interféromètre démodulateur (18), caractérisé en ce que l'interféromètre démodulateur (18) est un interféromètre de Michelson à réseaux (32) dans lequel les réseaux (32) sont dans un montage de Littrow pour la longueur d'onde centrale du flux lumineux émis par la source (10), l'interféromètre démodulateur comprenant en sortie des moyens (30) de formation d'une image sur une barrette linéaire (20) de photodiodes ou de photorécepteurs du type CCD.

2. Dispositif selon la revendication 1, caractérisé en ce que l'interféromètre démodulateur (18) comprend une lentille de collimation (26) en entrée, un cube séparateur de faisceaux (28), deux réseaux (32) placés le long de deux faces du cube et une lentille (30) de focalisation en sortie.

3. Dispositif selon la revendication 2, caractérisé en ce que les deux réseaux (32) sont orientés de façon symétrique par rapport au cube séparateur (28).

4. Dispositif selon une des revendications 1 à 3, caractérisé en ce que les réseaux (32) sont utilisés dans un montage de Littrow du premier ordre.

5. Dispositif selon l'une des revendications précédentes, caractérisé en ce que les deux réseaux (32) sont déplaçables en translation et en rotation.

6. Dispositif selon l'une des revendications précédentes, caractérisé en ce qu'il est associé à plusieurs capteurs à codage de modulation spectrale.

7. Dispositif selon l'une des revendications précédentes, caractérisé en ce qu'un bras de l'interféromètre démodulateur comprend un moyen de retard programmable, permettant de faire varier le retard global d'une quantité comprise dans la plage [-π/2, +π/2].

8. Dispositif selon l'une des revendications précédentes, caractérisé en ce que les capteurs comprennent des fibres optiques biréfringentes, avec ou sans points de couplage.
